# EUROPÄISCHE PATENTSCHRIFT

(11) **EP 1 470 873 B1**
(45) Veröffentlichungstag und Bekanntmachung des Hinweises auf die Patenterteilung: **19.09.2007**
(21) Anmeldenummer: 04009524.2
(22) Anmeldetag: 22.04.2004
(51) Int. Cl.: B21D 53/88, F16H 63/32, B21J 5/08

(54) **Verfahren zum Herstellen von Schaltgabeln und Schaltgabel für Getriebe von Kraftfahrzeugen**
Method for manufacturing shift forks and shift fork for gearboxes of motor vehicles
Procédé de fabrication de fourchettes de changement de vitesse et fourchette pour boîtes de vitesses de véhicules automobiles

(30) Priorität: 24.04.2003 DE 10318677
(43) Veröffentlichungstag der Anmeldung: 27.10.2004
(73) Patentinhaber: ISE Industries GmbH, 58455 Witten (DE)
(72) Erfinder: Löwen, Jakob, 51467 Gummersbach (DE); Schalla, Holger, 58453 Witten (DE); Völpert, Gerhard, 58452 Witten (DE); Greff, Hartmut, 44623 Herne (DE)
(74) Vertreter: Wenzel & Kalkoff

(56) Entgegenhaltungen:
- DE-U- 1 848 789
- US-B1- 6 374 692
- PATENT ABSTRACTS OF JAPAN Bd. 0051, Nr. 99 (M-102), 17. Dezember 1981 (1981-12-17) -& JP 56 117850 A (KUBOTA HISATAKA), 16. September 1981 (1981-09-16)
- PATENT ABSTRACTS OF JAPAN Bd. 2002, Nr. 12, 12. Dezember 2002 (2002-12-12) -& JP 2002 239663 A (TAIHO KOGYO CO LTD), 27. August 2002 (2002-08-27)

## Beschreibung

Die Erfindung betrifft ein Verfahren zum Herstellen von Schaltgabeln, Schaltschwingen, Hebeln etc., insbesondere für Getriebe von Kraftfahrzeugen, mit einem Auge für eine Lagernabe oder dergleichen, aus einem streifenförmigen Blechhalbzeug, dessen Länge ein Mehrfaches seiner Breite beträgt. Die Erfindung bezieht sich auch auf eine Platine für Schaltgabeln, Schaltschwingen, -hebel oder dergleichen mit Augen für Lagernaben sowie auf eine fertig hergestellte Schaltgabel.

Es ist bekannt, Platinen für Schaltgabeln, Schaltschwingen oder dergleichen mittels eines Feinschneidwerkzeugs fortlaufend aus einem Blechstreifen herzustellen, dessen Breite etwa der gewünschten Länge der Platine entspricht. Der Blechstreifen durchläuft aufeinanderfolgende Stationen des Feinschneidwerkzeugs, in denen die Platine den Fertigungsschritten Einschneiden, Biegen, Prägen, Lochen und Ausschneiden unterworfen wird. In einem gesonderten Fertigungsprozeß wird die Platine in eine U-Form fertig gebogen, wenn z.B. eine Schaltgabel hergestellt wird.

Im Bereich von Lagernaben der Gabel mit entsprechenden Lagerbohrungen ergibt sich ein durch die Öffnungen geringerer und entsprechend geschwächter Querschnittsbereich. Deshalb wird die Platine im Bereich der Lagernaben breiter ausgelegt, um den Festigkeits- und Steifigkeitsanforderungen zu entsprechen. Hierdurch sowie wegen der Feinschneidvorschriften bei der Festlegung des Streifenbildes auf Stegbreitenquerschnitt fällt bei diesem Verfahren ein hoher Schrottanteil an, der bis zu ca. 90 % des Blechstreifens beträgt.

Aus PATENT ABSTRACTS OF JAPAN Bd. 0051, Nr. 99 (M-102), 17. Dezember 1981 (1981-12-17) - & JP 56 117 850 A ist zur Herstellung von Blattscharnieren bereits bekannt, vorstehende Teile von Platten aus Stahlblech in einem Umformwerkzeug unter Druck durch Materialfluß in Zylinder umzuformen. Dabei wird das durch Druck in der Plattenebene verdrängte Material in im Querschnitt halbkreisförmige Nischen in der Form des Umformwerkzeugs gedrückt. Dort werden die Zylinder gebildet, die zur Aufnahme von Scharnierzapfen in Längsrichtung aufgebohrt werden. Die Bohrung für den Scharnierzapfen verläuft folglich parallel zur Plattenebene. Bei dem Verfahren, auf das die Erfindung gerichtet ist, wird ein streifenförmiges Blechhalbzeug vorausgesetzt, dessen Länge ein Mehrfaches seiner Breite beträgt. Das Ausgangsmaterial bei dem bekannten Scharnierherstellungsverfahren besteht jedoch aus quadratischen oder rechteckigen Stahlblechplatten, aus denen Scharnierblattrohlinge mit vorstehenden Teilen ausgestanzt bzw. mit Laserstrahl ausgeschnitten werden. Deshalb ist das Ausgangsmaterial verschieden von einem streifenförmigen Blechhalbzeug, dessen Länge ein Mehrfaches seiner Breite beträgt, wie es bei dem Verfahren zum Herstellen von Platinen von Schaltgabeln etc. vorausgesetzt wird, auf das die Erfindung gerichtet ist. Bei dem bekannten Verfahren lässt sich ein sehr hoher Blechabfall beim Ausstanzen der Scharnierteile aus den Stahlblechplatten nicht vermeiden. Durch die Unterschiede im Ausgangsmaterial unterscheiden sich auch die weiteren Schritte zur Herstellung der beiden Scharnierteile von den Bearbeitungsschritten, die zur Herstellung von Schaltgabeln, Schaltschwingen, Hebeln etc. erforderlich sind.

Die US-B-6 374 692 zeigt als ausgeformte Augen an einer U-förmigen Schaltschwinge in Öffnungen der Seitenarme der Schaltschwinge eingesetzte Lagerbuchsen. Die Lagerbuchsen können in die Öffnungen der Seitenarme eingepresst sein. Neben den Lagerbuchsen weisen die Seitenarme zusätzlich ausgestanzte Öffnungen auf, die trotz augenförmiger seitlicher Vorsprünge in der Festigkeit geschwächte Querschnittsbereiche zur Folge haben. Außerdem erstrecken sich von der Platine im Bereich des Gabelrückens bzw. eines entsprechenden Quergliedes auf beiden Seiten der Platine Vorsprünge, die bei der nachfolgenden Umformung der Platine zur Schaltschwinge rechtwinklig hochgebogen werden. Deshalb wird die Platine im Bereich dieser Laschen sehr breit ausgelegt werden, so daß bei diesem Verfahren beim Ausstanzen der Platine aus dem Blechvormaterial ein hoher Schrottanteil anfällt.

Aus DE 18 48 789 U ist ein gabelförmige Schwenkhebel mit Lageraugen in einem geraden Abschnitt aus Blechstreifen sowie mit hohlzylindrischen Vorsprüngen am Ende der Gabelzinken bekannt. Als Ausgangsmaterial wird Schmalband aus Blech verwendet, dessen Länge ein Mehrfaches seiner Breite beträgt. Allerdings wird in Kauf genommen, dass sich sowohl durch das Herausdrücken hohlzylindrischer Vorsprünge am Ende der Gabelzinken als auch durch das Herausdrücken der Lageraugen in den geraden Abschnitten der Blechstreifen entsprechend geschwächte Querschnittsbereiche ergeben. Denn seitliche Erweiterungen der Blechstreifen im Bereich der hohlzylindrischen Vorsprünge und der Lageraugen sind nicht vorgesehen.

Aus der Druckschrift PATENT ABSTRACTS FO JAPAN, Bd. 2002, Nr. 12, 12. Dezember 2002 (2002-12-12) - & JP 2002 239663 A ist bekannt, eine mit einer Öffnung versehene Scheibe für eine Schwenkplatte am Rand der Öffnung durch einen Flansch- oder Wulstteil zu verstärken, wobei sich ein dünnes Scheibenteil an den Flansch- oder Wulstteil abschließt. Die Herstellung eines Flansch- oder Wulstteils zur Verstärkung der Öffnung einer Scheibe lässt sich nicht für ein Verfahren zum Herstellen von Platinen für Schaltgabeln, Schaltschwingen, Hebeln etc. verwenden.

Der Erfindung liegt deshalb die Aufgabe zugrunde, ein Verfahren zum Herstellen von Platinen für Schaltgabeln, Schaltschwingen, Hebeln etc. mit einem Auge für eine Lagernabe oder dergleichen aus einem Blechhalbzeug zu schaffen, bei dem der Anteil des Blechabfalls nachhaltig verringert wird, ohne daß die Fertigungsschritte des bisherigen Verfahrens wesentlich umgestellt werden müssen.

Erfindungsgemäß wird diese Aufgabe dadurch gelöst, daß
- als Blechhalbzeug ein Schmalband verwendet wird und
- das Schmalband in einem Umformwerkzeug
- in einem Bereich des Schmalbandes, der an die gewünschte Position der Lagernabe angrenzt,
- einer axialen Stauchung durch Kaltumformung infolge der
- Ausübung axialer Kräfte auf das Schmalband einer derartigen Verformung unterworfen wird,
- daß durch die Druckeinwirkung verdrängtes Blechmaterial in mindestens eine seitliche Nische des Umformwerkzeuges gedrückt
- und so ein Auge an dem Schmalband gebildet wird.

Erfindungsgemäß wird folglich durch Ausübung von Stauchkräften vor allem in dem an die gewünschte Position der zu bildenden Lagernabe angrenzenden Bereich das Blechmaterial in einem Kaltumformungsprozeß, also unter Vermeidung eines Schmiedeprozesses, in einem Umformwerkzeug unter axialer Kraftwirkung derart verdrängt, daß es in eine oder auch in mehrere Nischen des Umformwerkzeugs verdrängt wird und diese ausfüllt. Auf diese Weise kann eine Verbreiterung und/oder Verdickung des Schmalbandes erreicht werden, die sich für Lagernaben oder dergleichen eignen, deren Materialquerschnitte durch die Lageröffnungen nicht geschwächt sind sondern im Gegenteil hohe Festigkeit und Steifigkeit aufweisen. Durch Anwendung dieses Umformprozesses kann für für die Herstellung von Platinen von Schaltgabeln etc. an Stelle des bisher üblichen Blechstreifenvormaterials Schmalband als Blechhalbzeug verwendet werden, dessen Breite bereits im wesentlichen der Breite des späteren Fertigteils entspricht, so daß sich nur noch ein sehr geringer Schrottanteil durch Feinarbeiten wie Lochen, Abschneiden etc. ergibt.

Es ist möglich, die axialen Kräfte zum Verdrängen des Materials gleichzeitig gegenläufig auf die Nachbarbereiche der Position der Lagernabe auszuüben. Ebenso ist es möglich, Nischen des Umformwerkzeugs in zwei aufeinanderfolgenden Schritten durch Verdrängen des Materials der Nachbarbereiche mit Material zu füllen. Erfindungsgemäß wird jedoch bevorzugt, daß die axialen Kräfte zum Verdrängen des Materials aus einer Richtung ausgeübt werden, so daß die Nische bzw. die Nischen gefüllt werden, indem Material aus einem der Nachbarbereiche in den Bereich des zu bildenden Auges gedrückt wird. Die Verdrängung des Materials in nur einer axialen Richtung ist auch deshalb zweckmäßig, weil sich auf diese Weise die Materialverschiebungen einfacher bei den Längenänderungen berücksichtigen lassen.

Je nach Art des Umformwerkzeugs können an einem fortlaufenden Schmalband als Halbzeug Augen in vorgegebenen Abständen angeformt werden. Erfindungsgemäß wird jedoch bevorzugt, daß von dem Schmalbandhalbzeug ein Rohling von bestimmter Ausgangslänge abgeteilt und der Rohling in das Umformwerkzeug eingelegt und das Auge ausgeformt wird, wobei sich die Ausgangslänge des Rohlings auf das vorbestimmte Maß der Platine verkürzt, das der Materialverdrängung in die Nische(n) entspricht. Wegen der Materialverdrängung mit Ausbildung von Augen an dem Schmalband im Umformwerkzeug erhält der Rohling eine entsprechend größere Ausgangslänge, damit das Maß der Platine, die das Umformwerkzeug verläßt, der vorbestimmten Längenabmessung der Platine entspricht.

Da sich die an die Anformung von Augen an dem Schmalband anschließenden Fertigungsschritte nicht prinzipiell von der bisherigen Fertigung unterscheiden, liegt es auf der Hand, daß die Erfindung ein wesentlich kostengünstigeres Herstellungsverfahren für Schaltgabeln, aber auch für Schaltschwingen, Hebel etc., an denen ebenfalls Augen insbesondere für Lagernaben gebraucht werden, ermöglicht.

Die Erfindung bezieht sich auch, wie schon eingangs angegeben ist, auf Platinen für Schaltgabeln etc. Solche Platinen sind dadurch gekennzeichnet, daß die Platine aus Schmalband als Blechhalbzeug besteht und jedes Auge der Platine durch axiale Stauchung des Schmalbandes durch Kaltumformung seitlich angeformt ist, wobei das Material des Auges aus angrenzenden Bereichen des Schmalbandes in den Bereich des Auges verdrängt und gemeinsam mit dem Material an der Position des Auges in die Form einer Verdickung gedrückt ist. Die Herstellung des Auges erfolgt demnach in einem Kaltumformungsprozeß.

Ein selbständiger Bestandteil der Erfindung ist auch eine Schaltgabel bzw. eine Schaltschwinge mit zwei Gabelschenkeln, die U-förmig durch einen Gabelrücken verbunden sind und Augen zur Herstellung von Naben für Lagerbohrungen aufweisen, wobei die

Besonderheit darin besteht, daß die Gabelschenkel und der Gabelrücken aus Schmalband aus Blechmaterial bestehen und seitlich vorstehende Augen aufweisen, die aufgrund axialer Stauchung des Schmalbandes durch Kaltumformung von Material aus den Nachbarbereichen als Verdickung einteilig mit diesem an das Schmalband angeformt sind.

Ausführungsbeispiele der Erfindung werden nachstehend mit Bezug auf die Zeichnungen näher erläutert. In den Zeichnungen zeigen:
- Fig. 1: eine Längsschnittdarstellung eines Umformwerkzeugs;
- Fig. 1a: eine Querschnittsansicht des Umformwerkzeugs von Fig. 1;
- Fig. 1b: eine Draufsicht auf eine Einlageplatte des Umformwerkzeugs von Fig. 1 und 2;
- Fig. 2: eine Draufsicht eines aus einem Schmalbandabschnitt bestehenden Rohlings für eine Schaltgabel;
- Fig. 3 Fig. 4, 5 u. 6: eine Draufsicht einer aus dem Rohling von Fig. 2 hergestellten Platine; eine Seitenansicht, eine Draufsicht und eine weitere Seitenansicht aus einem anderen Blickwinkel der weiterbearbeiteten Platine von Fig. 3;
- Fig. 7, 8 u. 9: eine Vorderansicht, eine Seitenansicht und eine Draufsicht der fertig bearbeiteten nun U-förmigen Schaltgabel;
- Fig. 10: eine perspektivische Ansicht der fertigen Schaltgabel mit angeschlossenen Elementen.

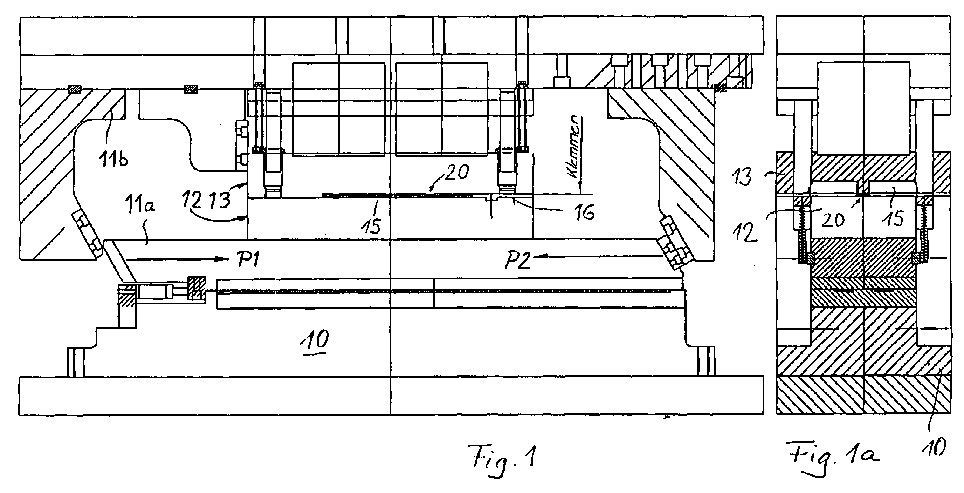

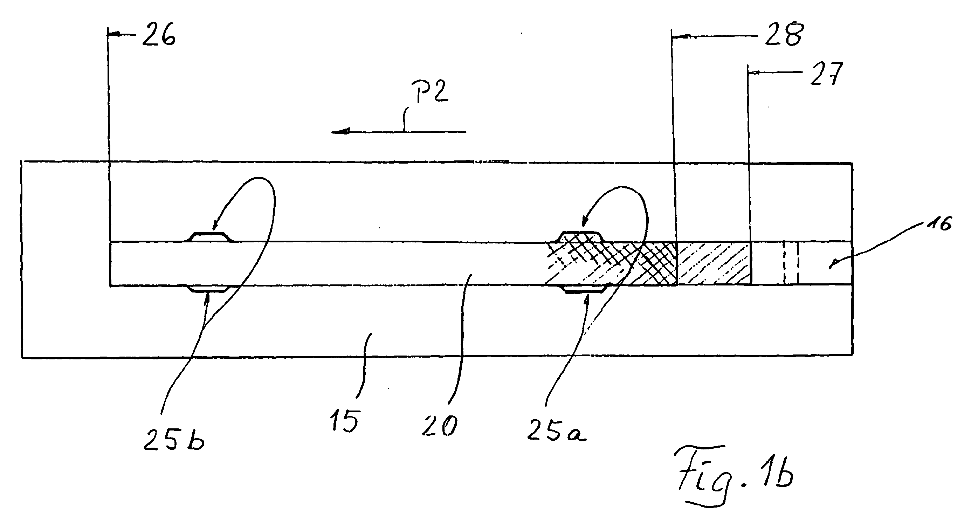

Ein in Fig. 1 und 1a dargestelltes Umformwerkzeug weist auf einem Gestell 10 ein Werkzeugunterteil 11a auf, das mittels eines Keiltriebs in einem Werkzeugoberteil 11b zum Umformen eines Werkstücks in Richtung eines Pfeils P2 verschoben und in Richtung eines Pfeils P1 in die Ausgangsstellung zurückgeholt wird. Das zu verformende Werkstück wird zwischen einem Klemmtisch 12 und einem Klemmhaupt 13 eingespannt bzw. geklemmt.

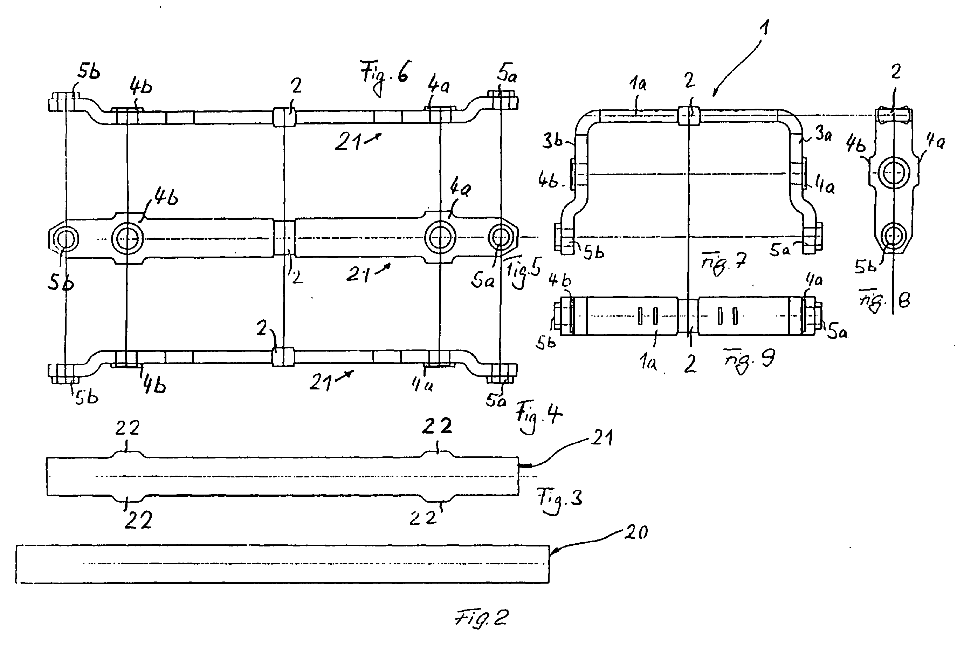

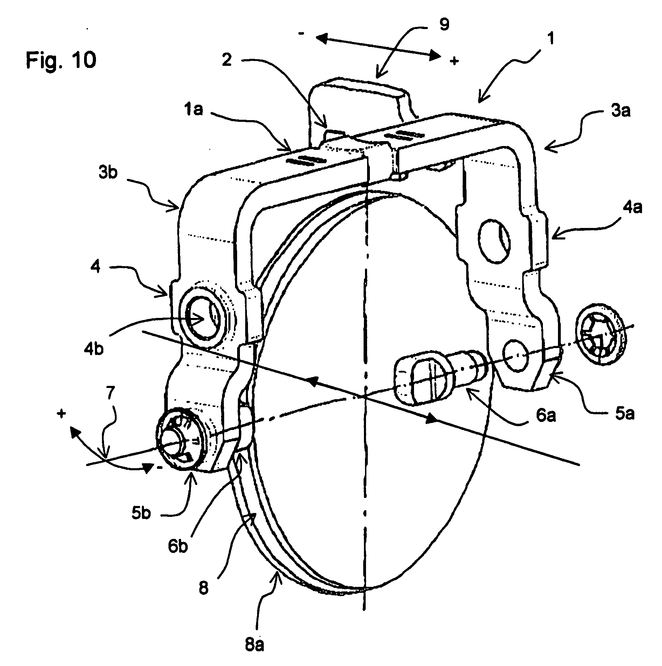

In Fig. 2 ist ein mit Längenvorhaltemaß von Schmalband aus Blechmaterial abgelängter Rohling 20 dargestellt. Dieser wird in eine Einlageplatte 15 (vgl. Fig. 1b) des Klemmtischs 12 eingelegt, die dort, wo an dem eingelegten Rohling 20 Augen 22, die an einer bereits fertigen und in Fig. 3 dargestellten Platine 21 zu sehen sind, ausgebildet werden sollen, durch zwei Paare aus Nischen 25a, 25b auf die Querschnittsform dieser Augen 22 verbreitert ist. An einem Ende des Rohlings 20 ist am Klemmtisch 12 ein Staucheinsatz 16 fest eingelassen, der die Querschnittsmaße des Rohlings 20 aufweist. Der Rohling 20 wird zwischen dem Klemmtisch 12 und dem Klemmhaupt 13 vertikal unter Berücksichtigung der Halbzeugdickentoleranz festgeklemmt und verriegelt.

Nun wird das Werkzeugunterteil 11a mittels des Keiltriebs, wie schon erwähnt, horizontal in Richtung des Pfeils P2 verschoben. Dabei werden auf den Rohling 20 axial gerichtete Kräfte ausgeübt, die das Material komprimieren, so daß es in die Nischen 25a, 25b der Einlageplatte 15 des Klemmtischs 12 ausweicht. So wird die in Fig. 3 dargestellte Platine 21 mit vier ausgeformten Augen 22 zur nachfolgenden Ausbildung entsprechender Naben 4a, 4b hergestellt. In Fig. 1b wird veranschaulicht, wie der in die Einlageplatte 15 des Umformwerkzeugs eingesetzte Rohling 20 zu der Platine 21 verformt, nämlich gestaucht wird. Das in der Zeichnung rechte Ende des Rohlings 20 wird durch den Pfeil 27 markiert, während das andere Ende des Rohlings 20 mit Anlage im Oberteil durch den Pfeil 26 angegeben ist. Durch den Stauchprozeß, wenn nämlich das Werkzeugunterteil 11a in Pfeilrichtung P2 verschoben wird, wird, wie bei den Nischen 25a in Fig. 1b veranschaulicht ist, das Blechmaterial in die einander gegenüberliegenden Nischen 25a der Einlageplatte 15 verdrängt. Gleichzeitig fließt entsprechendes Material in die Nischen 25b des zweiten Nischenpaares. Am Ende de Stauchprozesses ist aus dem Rohling 20 die Platine 21 geworden, die deutlich kürzer als der Rohling 20 ist, wie durch den Pfeil 28 in Fig. 1b verdeutlicht wird. Nach dem Kaltumformprozess wird das Werkzeugunterteil 11a in Pfeilrichtung P1 wieder in seine Ausgangslage zurückgeschoben.

Die Platine 21 wird nun weiteren Folgeprozessen wie Biegen, Prägen, Lochen und Endenkonturschneiden im Transwerkzeug zugeführt. Dort werden an der Platine 21 die Naben 4a, 4b an den Augen sowie die Lagerbohrungen 5a, 5b und ebenso der Ballus 2 ausgeformt, wie Fig. 4, 5 und 6 verdeutlichen.

Anschließend wird die Platine 21 zu der in Fig. 7, 8 und 9 dargestellten U-förmigen Schaltgabel i gebogen, von der sich eine perspektivische Ansicht in Fig. 10 befindet.

Diese insbesondere zum Einsatz in Automobilgetrieben bestimmte Schaltgabel 1 weist nun den Gabelrücken 1a mit dem angeformten Ballus 2 und mit jeweils seitlich rechtwinklig abgewinkelten Gabelschenkeln 3a und 3b auf. An diesen befinden sich die verbreiterten Lagernaben 4a, 4b mit den entsprechenden Lagerbohrungen sowie die Lagerbohrungen 5a, 5b für die drehbar gelagerten Mitnehmersegmente 6a, 6b.

Die Schaltgabel 1 ist im Getriebegehäuse (nicht dargestellt) mittels zweier Lagerzapfen (nicht dargestellt), die in die Lagerbohrungen der Naben 4a, 4b greifen, zu beiden Richtungen 7 hin schwenkbar gelagert. Die Mitnehmersegmente 6a, 6b greifen in die Schiebemuffennut 8 der Schiebemuffe 8a ein. An dem Rücken des Ballus 2 greift eine axial verschiebbare Schaltschiene 9 des Getriebes mit einem angeformten Schaltmaul an. Diese veranlaßt je nach Verschieberichtung eine Schwenkbewegung 7 der Schaltgabel 1 und verschiebt über die Mitnehmersegmente 6a, 6h die Schiebemuffe 8a zum Radsatzpaar (nicht dargestellt) des jeweils angewählten Ganges des Getriebes.

Aus der Darstellung von Fig. 10 geht noch einmal die Bedeutung der Lagernaben 4a, 4b an den Gabelschenkeln 3a, 3b hervor, die sich durch hohe Festigkeit und Steifigkeit auszeichnen.

Aus der Beschreibung der Wirkungsweise des Stauehwerkzeugs von Fig. 1 und Fig. 1a beim Umformen des Rohlings 20 gemäß Fig. 2 zur Platine 21 gemäß Fig. 3 ergeben sich die Vorteile des erfindungsgemäßen Verfahrens, womit ermöglicht wird, die Platine 21 aus Schmalband als Vormaterial in einfacher und kostengünstiger Weise praktisch ohne Schrottabfall herzustellen.

## Patentansprüche

1. Verfahren zum Herstellen von Platinen von Schaltgabeln, Schaltschwingen, Hebeln etc., insbesondere für Getriebe von Kraftfahrzeugen, mit einem Auge für eine Lagernabe oder dergleichen, aus einemstreifenförmigen Blechhalhzeug, dessen Länge ein Mehrfaches seiner Breite beträgt, **dadurch gekennzeichnet, daß**
- als Blechhalbzeug ein Schmalband (20) verwendet wird und
- das Schmalband in einem Umformwerkzeug
- in einem Bereich des Schmalbandes, der an die gewünschte Position der Lagernabe angrenzt,
- einer axialen Stauchung durch Kaltumformung infolge der
- Ausübung axialer Kräfte auf das Schmalband einer derartigen Verformung unterworfen wird,
- daß durch die Druckeinwirkung verdrängtes Blechmaterial in mindestens eine seitliche Nische (25a, 25b) des Umformwerkzeuges gedrückt
- und so ein Auge an dem Schmalband gebildet wird.

2. Verfahren nach Anspruch 1, **dadurch gekennzeichnet, daß** die axialen Kräfte zum Verdrängen des Materials aus einer Richtung ausgeübt werden, so daß die Nischen gefüllt werden, indem Material aus einem der Nachbarbereiche in den Bereich des zu bildenden Auges gedrückt wird.

3. Verfahren nach Anspruch 1 oder 2, **dadurch gekennzeichnet, daß** von dem Schmalbandhalbzeug ein Rohling von bestimmter Ausgangslänge abgeteilt und der Rohling in das Umformwerkzeug eingelegt und das Auge angeformt wird, wobei sich die Ausgangslänge des Rohlings auf das vorbestimmte Maß der Platine verkürzt, das der Materialverdrängung in die Nische(n) entspricht.

4. Platine für Schaltgabeln, Schaltschwingen, -hebel oder dergleichen, aus einem streifenförmigen Blechhalbzeug, dessen Länge ein Mehrfaches seiner Breite beträgt, insbesondere für Getriebe von Kraftfahrzeugen, mit Augen für Lagernaben, **dadurch gekennzeichnet, daß** die Platine (21) aus Schmalband als Blechhalbzeug besteht und jedes Auge (22) der Platine (21) durch axiale Stauchung des Schmalbandes durch Kaltumformung seitlich angeformt ist, wobei das Material des Auges (22) aus angrenzenden Bereichen des Schmalbandes in den Bereich des Auges (22) verdrängt und gemeinsam mit dem Material an der Position des Auges (22) in die Form einer Verdickung gedrückt ist.

5. Schaltgabel bzw. Schaltschwinge, insbesondere für Getriebe von Kraftfahrzeugen, mit zwei Gabelschenkeln, die U-förmig durch einen Gabelrücken verbunden sind und Augen zur Herstellung von Naben für Lagerbohrungen aufweisen, **dadurch gekennzeichnet, daß** die Gabelschenkel (3a, 3b) und der Gabelrücken (1a) aus Schmalband aus Blechmaterial bestehen und seitlich vorstehende Augen (4a, 4b) aufweise, die aufgrund axialer Stauchung des Schmalbandes durch Kaltumformung von Material aus den Nachbarbereichen als Verdickung einteilig mit diesem an das Schmalband angeformt sind.

## Claims

1. Method of manufacturing plates for gear shift forks, shift rockers, levers etc., in particular for gears of motor vehicles, including an eye for a journal hub or the like, said plates being made from lamellar pieces of semi-finished sheet metal the lengths of which forming a multiple of their widths, **characterized in**
- **that** a narrow strip (20) of material is used as said piece of semi-finished sheet metal,
- **that**, in a reshaping die
- and in a region of said narrow strip of material which is adjacent to the desired position of the journal hub,
- said narrow strip of material is subjected to axial upsetting by cold forming
- due to axial forces being exerted onto the narrow strip to an extent of deformation such that
- sheet metal material being displaced by said pressure exertion is pressed into at least one lateral recess (25a, 25b) of said reshaping die,
- and **that** an eye is formed on the narrow strip of material thereby.

2. Method as claimed in claim 1, **characterized in that** said axial forces for displacing the material are exerted from one direction such that the recesses are filled with the material being pressed from one of the adjacent regions into the region of the eye to be formed.

3. Method as claimed in claim 1 or 2, **characterized in that** a blank having a defined starting length is severed from the semi-finished narrow strip of material, that the blank is inserted into the reshaping die and that the eye is formed thereto, wherein said starting length of the blank is reduced to the predetermined size of the plate, which size corresponds to the extent of material displaced into the recess (es).

4. Plate for gear shift forks, shift rockers, levers or the like made from a piece of lamellar semi-finished sheet metal the length of which forms a multiple of its width, in particular for gears of motor vehicles, including eyes for journal hubs, **characterized in that** the plate (21) consists of a narrow strip of material as said piece of semi-finished sheet metal, and that each one of said eyes (22) of the plate (21) is formed thereto laterally by axial upsetting of the narrow strip of material through cold forming, the material of the eye (22) being displaced from adjacent regions of the narrow strip of material into the region of the eye (22) and, together with the material, being pressed into the shape of a swelling at the position of the eye (22).

5. Shift fork or shift rocker, in particular for gears for motor vehicles, including two fork legs connected with each other in a U-shaped manner by a fork web and being provided with eyes for producing hubs for journal boreholes, **characterized in that** the fork legs (3a, 3b) and the fork web (1a) consist of a narrow strip of sheet metal material and have laterally protruding eyes (4a, 4b) which, due to axial upsetting of said narrow strip, are formed to the narrow strip by cold forming of material from adjacent regions as a swelling integral therewith.

## Revendications

1. Procédé de fabrication de platines de fourchettes de boîte de vitesses, de bielles oscillantes, de leviers, etc., en particulier pour boîtes de vitesses de véhicules automobiles, avec un oeillet pour un moyeu de roulement ou similaire, à partir d'un produit semi-fini en tôle en forme de ruban, dont la longueur est un multiple de sa largeur, **caractérisé en ce que**
- comme produit semi-fini en tôle, il est utilisé une bande étroite (20) et
- la bande étroite, dans un outil de formage,
- dans une zone de la bande étroite qui jouxte la position souhaitée du moyeu de roulement,
- est soumise à un refoulement axial par déformation à froid du fait de
- l'exercice de forces axiales sur la bande étroite d'une déformation telle
- que, par l'action de pression, le matériau de tôle refoulé est pressé dans au moins une niche (25a, 25b) latérale de l'outil de formage
- et que ainsi un oeillet est formé sur la bande étroite.

2. Procédé selon la revendication 1, **caractérisé en ce que** les forces axiales pour le refoulement du matériau sont exercées à partir d'une direction de sorte que les niches sont remplies par le fait que du matériau est pressé à partir d'une des zones voisines vers la zone de l'oeillet à former.

3. Procédé selon la revendication 1 ou 2, **caractérisé en ce que**, à partir du produit semi-fini de bande étroite, un flan d'une longueur initiale déterminée est séparé, et le flan est introduit dans l'outil de formage et l'oeillet est formé, la longueur initiale du flan étant raccourcie à la mesure prédéterminée de la platine qui correspond au refoulement de matériau dans la niche ou les niches.

4. Platine pour fourchettes de boîte de vitesses, bielles oscillantes, leviers de commande ou similaires, à partir d'un produit semi-fini en tôle en forme de ruban dont la longueur est un multiple de sa largeur, en particulier pour boîtes de vitesses de véhicules automobiles, avec des oeillets pour moyeux de roulements, **caractérisée en ce que** la platine (21) est composée à partir d'une bande étroite en tant que produit semi-fini en tôle, et chaque oeillet (22) de la platine (21) est formé latéralement par refoulement axial de la bande étroite par déformation à froid, le matériau de l'oeillet (22) étant refoulé à partir de zones limitrophes de la bande étroite dans la zone de l'oeillet (22) et pressé en commun avec le matériau au niveau de la position de l'oeillet (22) pour prendre la forme d'un épaississement.

5. Fourchette de boîte de changement de vitesses ou bielle oscillante, en particulier pour boîtes de vitesses de véhicules automobiles, avec deux branches de fourche qui sont raccordées en U par un dos de fourche et présentent des oeillets pour la fabrication de moyeux pour alésages de roulement, **caractérisée en ce que** les branches de fourche (3a, 3b) et le dos de fourche (1a) sont composés d'une bande étroite en matériau de tôle et présentent des oeillets (4a, 4b) faisant saillie latéralement qui, du fait du refoulement axial de la bande étroite par déformation à froid de matériau à partir des zones voisines, sont formés sur la bande étroite en tant qu'épaississement d'un seul tenant avec celle-ci.
